# DEMANDE DE BREVET EUROPEEN

(11) **EP 3 208 121 A1**
(43) Date de publication de la demande: **23.08.2017**
(21) Numéro de dépôt: 17154874.6
(22) Date de dépôt: 06.02.2017
(51) Int. Cl.: B60H 1/00

(54) **SYSTÈME DE VENTILATION D'AIR POUR VÉHICULE AVEC OBTURATEUR**

(30) Priorité: 17.02.2016 FR 1651260
(71) Demandeur: Peugeot Citroën Automobiles SA, 78140 Vélizy-Villacoublay (FR)
(72) Inventeur: TOULERON, Damien, 90110 St Germain Le Châtelet (FR)

(57) **Abrégé**

Obturateur (30, 130, 230, 330) pour un système de ventilation (1) pour véhicule, comprenant une paroi agencée pour obturer un conduit d'air dudit système de ventilation, caractérisé en ce que ladite paroi comprend au moins une portion souple (31, 131, 231 a, 331) agencée pour être déformée lors d'un contact entre la paroi et un volet mobile dudit système de ventilation (1), pour permettre un déplacement complet dudit volet mobile (40).

## Description

L'invention concerne un obturateur destiné à obturer le conduit d'aération d'un système de ventilation de véhicule.

Les constructeurs automobiles proposent des gammes de véhicules très étendues, tous les véhicules étant munis d'un système de ventilation servant à chauffer ou à refroidir l'habitacle. Il était donc nécessaire de développer un système de ventilation adapté pour chaque véhicule, pour tenir compte des contraintes spécifiques en terme de flux d'air, d'encombrement du système de ventilation et d'agencement de l'espace intérieur du véhicule. Ceci rendait nécessaire le développement et le maintien d'un grand nombre de systèmes de ventilation différents, ce qui représentait une perte de ressources importante.

Une solution à ce problème a consisté à développer des systèmes de ventilation modulables pour différents véhicules, réduisant par là même le nombre de références de systèmes de ventilation nécessaires pour équiper une gamme entière de véhicules.

Le document FR 2 813 560 propose une installation de chauffage et de climatisation dont le flux d'air peut être régulé par un volet mobile et dans lequel un tronçon de raccordement peut être obturé si nécessaire.

Ce système à l'inconvénient d'être volumineux en raison de la distance importante entre le volet mobile de l'installation et l'obturateur obturant le tronçon de raccordement.

Un objet de l'invention est donc de résoudre ce problème, à savoir proposer un obturateur pour un système de ventilation compact, sans pour autant gêner le fonctionnement du volet mobile.

Cet objet est atteint grâce aux caractéristiques de la revendication 1 et des revendications dépendantes.

Un premier aspect de l'invention concerne un obturateur pour un système de ventilation pour véhicule, comprenant une paroi agencée pour obturer un conduit dudit système de ventilation, caractérisé en ce que ladite paroi comprend au moins une portion souple agencée pour être déformée lors d'un contact entre la paroi et un volet mobile dudit système de ventilation, pour permettre un déplacement complet dudit volet mobile. Cette portion souple permet donc l'ouverture complète d'un volet mobile dans les cas où, du fait de contraintes d'encombrement et de fabrication, il n'est possible de positionner l'obturateur qu'en une position induisant forcément une interférence avec le volet mobile. Le système de ventilation accueillant l'obturateur selon la présente invention est donc plus compact que les systèmes de ventilation de l'état de la technique, puisque l'obturateur peut être placé plus proche du volet mobile. De plus, dans le cas de plusieurs conduits d'air équipés de volets mobiles solidaires d'un même arbre de commande, l'obturation d'un des conduits d'air par un obturateur de la présente invention ne gêne pas la régulation du flux d'air dans les autres conduits d'air.

Avantageusement, ladite au moins une portion souple est, en outre, déformée de façon réversible par le volet mobile dudit système de ventilation. Cette déformation réversible permet à la portion souple d'accepter un grand nombre de contacts avec le volet mobile. Ceci peut être réalisé par un matériau adapté, tel qu'un matériau présentant des propriétés élastiques. Un exemple d'un tel matériau est un élastomère comme le caoutchouc, le polyisoprène synthétique, le polybutadiène ou le copolymère de styrène butadiène.

Alternativement, ladite au moins une portion souple est déformée de façon irréversible lors du premier contact avec le volet mobile. Puisque ce premier contact est fait après l'assemblage du système de ventilation, une déformation irréversible ne gène pas l'assemblage ou le fonctionnement du système de ventilation. Une telle déformation irréversible de la paroi souple permet d'éviter les contacts ultérieurs entre le volet mobile et l'obturateur, et ainsi d'éviter l'application d'un couple lié à ces contacts au système de commande du volet mobile. Une portion souple capable d'une telle déformation irréversible peut être fabriquée d'un matériau souple apte à la déformation plastique, choisi parmi les polymères, le papier ou le carton.

Avantageusement, la paroi de l'obturateur comprend une portion rigide en plus de la portion souple. Cette portion rigide peut être faite d'un même matériau que la portion souple, mais d'une épaisseur plus importante, ou bien d'un matériau rigide. Par exemple, un matériau rigide est un matériau qui n'est pas susceptible de se déformer lorsqu'il est en contact avec le volet mobile. De plus, la portion rigide peut être située autour d'une périphérie de la portion souple. Cette portion rigide contribue à rigidifier la paroi de l'obturateur et ainsi à augmenter la résistance de cette paroi au déchirement.

Avantageusement, l'obturateur de la présente invention comprend un cadre définissant une périphérie de la portion souple. Ce cadre contribue à rigidifier la portion souple de la paroi, garantissant ainsi une durabilité plus élevée de l'obturateur du fait d'une meilleure résistance à la déchirure de la paroi souple. De plus, ce cadre permet une attache ou un montage aisé à l'intérieur du conduit d'air, par exemple par collage, soudure, emboitement ou écrasement. De façon préférentielle, le cadre de l'obturateur comprend en outre des moyens d'attache aptes à l'attacher au conduit du système de ventilation. Alternativement ou en combinaison, l'obturateur de la présente invention est étanche à l'air. Ceci signifie que le flux d'air dans le conduit obturé peut être réduit d'au moins 95 %, préférentiellement au moins 99 %. De façon encore préférentielle, ce cadre comprend également un joint d'étanchéité périphérique destiné à assurer une étanchéité encore meilleure avec le conduit d'air.

Un deuxième aspect de la présente invention concerne un système de ventilation comprenant au moins un volet mobile, au moins un conduit d'air et au moins un obturateur comprenant une paroi agencée pour obturer le conduit d'air, la paroi comprenant au moins une portion souple agencée pour être déformée lors d'un contact entre la paroi et le volet mobile pour permettre un déplacement complet du dit volet mobile. Un tel système de ventilation peut être installé à la fois dans un véhicule comportant un grand nombre de bouches d'aération, sans l'obturateur, et dans un véhicule comportant peu de bouches d'aération, avec un ou plusieurs conduits d'air obturés. En effet, un tel système de ventilation peut avoir une construction assez compacte, par exemple en deux parties avec un carter comportant des volets mobiles assemblé sur un répartiteur de flux. De plus, l'obturateur de la présente invention permet de condamner les conduits d'air non utilisés dans certains véhicules sans gêner le fonctionnement des volets mobiles situés dans les conduits d'air utilisés.

Avantageusement, le dit volet mobile est agencé pour se déplacer d'une première position où il n'est pas en contact avec la dite paroi vers une deuxième position où il est en contact avec la dite paroi. Par exemple, la première position peut être une position où le volet mobile interdit un flux d'air dans le conduit d'air et la deuxième position peut être une position où le volet mobile autorise un flux d'air dans le conduit d'air si l'obturateur n'est pas présent. De façon préférentielle, le volet mobile peut autoriser dans sa deuxième position un flux d'air maximal dans le conduit d'air si l'obturateur n'est pas présent.

Avantageusement, la portion souple est déformée par le volet mobile lorsque le di volet mobile est déplacé de la première position à la deuxième position. L'obturateur selon la présente invention peut donc autoriser l'ouverture complète du volet mobile.

Avantageusement, le système de ventilation selon la présente invention comprend en outre :
- un arbre de commande sur lequel est embarqué le volet mobile,
- un deuxième conduit d'air,
- un deuxième volet mobile agencé pour réguler un flux d'air dans le deuxième conduit d'air,
et le deuxième volet mobile est embarqué sur ledit arbre de commande, pour être actionné en même temps que ledit volet mobile.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la Figure 1 représente une vue en perspective de l'assemblage d'un système de ventilation selon un exemple de la présente invention ;
- la Figure 2 représente une vue en coupe de face du système de ventilation de la figure 1 ;
- la Figure 3 représente une vue en coupe latérale d'un système de ventilation comprenant un volet mobile dans une première position et un obturateur ;
- la Figure 4 représente une vue en coupe latérale d'un système de ventilation comprenant un volet mobile dans une seconde position et un obturateur ;
- la Figure 5 représente une vue en coupe d'un système de ventilation comprenant deux volets mobiles dans deux conduits d'air parallèles, un des conduits d'air étant obturé par un obturateur ;
- la Figure 6 représente une vue en coupe d'un système de ventilation selon la présente invention comprenant deux volets mobiles dans deux conduits d'air parallèles, un des conduits d'air étant obturé par un obturateur selon la présente invention ;
- la Figure 7 représente un obturateur selon un premier mode de réalisation de la présente invention ;
- la Figure 8 représente un obturateur selon un deuxième mode de réalisation de la présente invention ;
- la Figure 9 représente un obturateur selon un troisième mode de réalisation de la présente invention.

Le système de ventilation décrit ci-dessous est prévu pour un emploi dans tout type de véhicule de tourisme ou utilitaire. Sa structure est modulable et peut donc adopter différents modes d'exécution. Ce système de ventilation est prévu pour fonctionner avec les éléments classiques de système de ventilation pour véhicule, notamment des éléments de ventilation, des éléments de filtration, des éléments de chauffage et des éléments de climatisation, qui seront donc omis des figures par soucis de clarté.

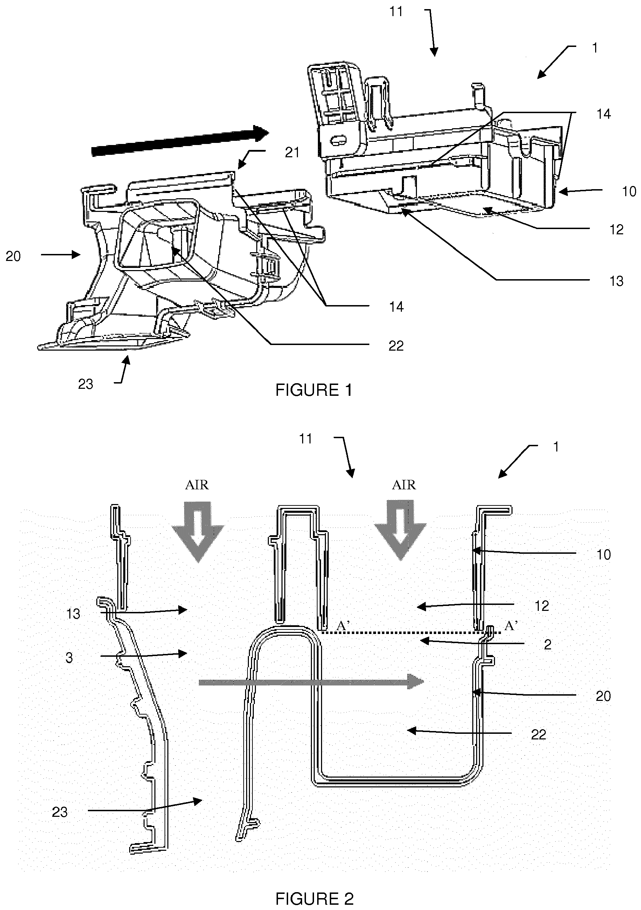

Le système de ventilation des Figures 1 et 2 comprend un carter 10 et un répartiteur de flux 20. Le carter 10 comprend une entrée supérieure 11 ou amont destinée à admettre de l'air au sein du système de ventilation, par exemple en provenance d'éléments de ventilation, de chauffage ou de climatisation comme indiqué par les deux flèches supérieures de la Figure 2. Le carter 10 comprend en outre deux sorties inférieures 12 et 13 ou aval destinées à expulser de l'air vers le répartiteur de flux 20. Le carter 10 comprend enfin deux glissières 14 destinées à assembler le carter 10 au répartiteur de flux 20.

Le répartiteur de flux 20 comprend une entrée supérieure 21 destinée à admettre de l'air en provenance du carter 10 ainsi que deux sorties inférieures 22 et 23 destinées à être connectées à des buses de ventilation afin d'expulser de l'air vers l'habitacle d'un véhicule. Le répartiteur de flux 20 comprend enfin dans sa partie supérieure deux gouttières 24 destinées à recevoir les glissières 14 du carter 10.

L'assemblage du système de ventilation 1 se fait par coulissement du répartiteur de flux 20 vers le carter 10 de telles sortes que les glissières 14 du carter 10 soient reçues dans les gouttières 24 du répartiteur de flux 20. L'assemblage par coulissement se fait selon la direction exprimée par les flèches transversales des Figures 1 et 2. La ligne A-A' de la Figure 2 représente l'encombrement maximal de la sortie inférieure 12 pour permettre l'assemblage du système de ventilation 1.

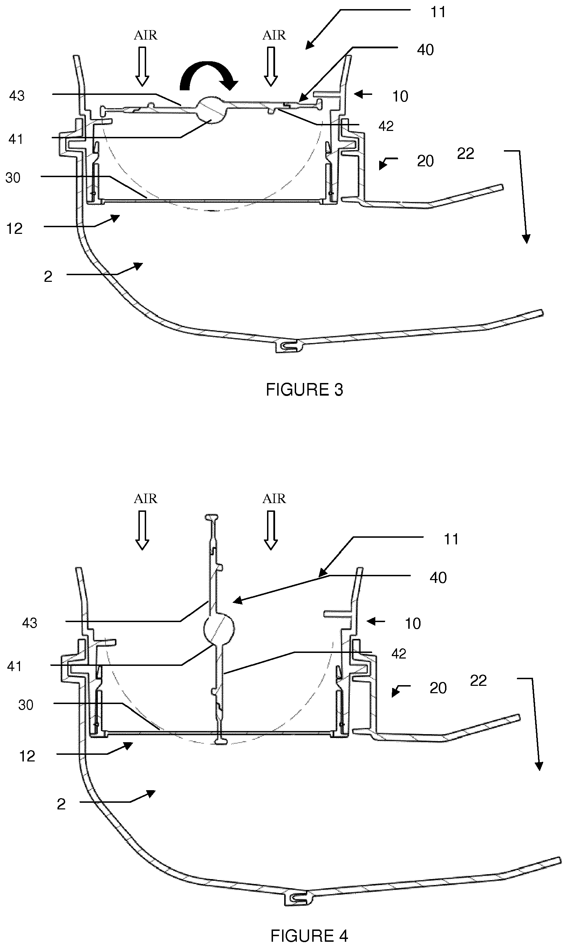

Une fois assemblé, comme visible à la Figure 2, le système de ventilation 1 fait apparaitre deux conduits d'air 2 et 3. Dans le cas où seul le conduit d'air 2 doit être obturé, par exemple pour installer le système de ventilation 1 dans un véhicule nécessitant peu de buses d'aération, il est nécessaire de placer un obturateur 30 afin d'obturer la sortie inférieure 12 du carter 10, comme visible à la Figure 3. Cependant, cet obturateur 30 ne peut être placé au-delà de la ligne A-A' visible sur la Figure 2 afin de ne pas gêner l'assemblage du système de ventilation 1.

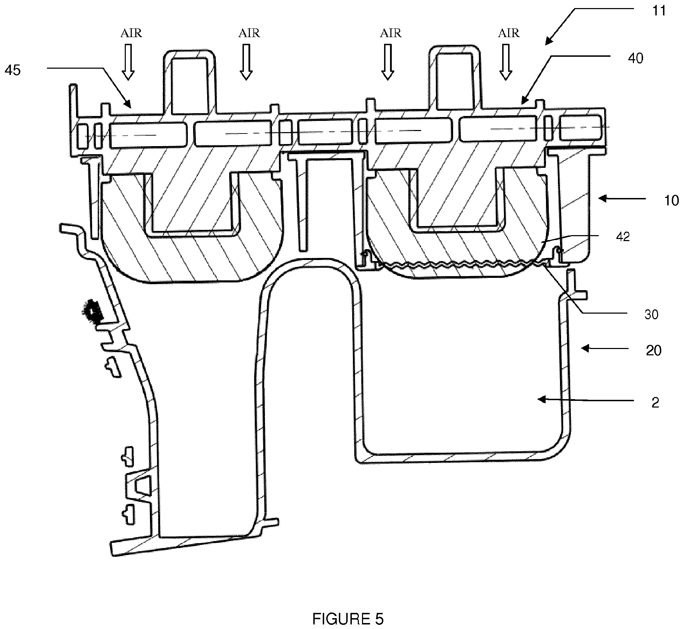

Le carter 10 accueille des volets mobiles 40, 45 destinés à réguler le flux d'air dans chaque conduit d'air tel qu'illustré dans les Figures 3 à 6. Sur ces Figures 3 à 6, le flux d'air théorique, possible uniquement en l'absence de l'obturateur 30, a été représenté pour faciliter la compréhension. Le volet mobile 40 comprend un arbre de commande 41 ainsi que des bras d'obturation 42, 43. Le volet mobile 40 est capable d'adopter une première position dans laquelle il est perpendiculaire à l'axe du conduit d'air 2 et interdit le flux d'air (Figure 3) et une deuxième position dans laquelle il est parallèle à l'axe du conduit d'air 2 et autoriserait le flux d'air en l'absence de l'obturateur 30 (Figure 4). Dans l'exemple présent, pour des raisons d'encombrement, la hauteur du carter 10 est inférieure à la longueur du volet mobile 40 et les bras d'obturation 42 et 43 du volet mobile 40 s'étendent au-delà de l'entrée d'air 11 et de la sortie d'air 12 quand le volet mobile 40 est dans la deuxième position visible à la Figure 4. En d'autres termes, l'obturateur 30 est à une distance de l'arbre de commande 41 du volet mobile 40 inférieure à la moitié de la longueur du volet mobile 40, ou bien à une distance inférieure à la distance entre l'arbre de commande du volet mobile 40 et l'extrémité du volet mobile 40 qui vient en contact de la paroi de l'obturateur 30. La mise en place d'un obturateur 30 dans le conduit d'air 2, tel que visible aux Figures 3 à 5 ne permettrait donc pas l'ouverture complète du volet mobile 40, du fait de l'interférence entre le bras d'obturateur 42 et l'obturateur 30, comme visible à la Figure 4. Ceci impacte directement le volet mobile 45 qui partage le même arbre de commande 41 et qui est placé dans le conduit d'air parallèle 3 (Figure 5). Le volet mobile 45 du conduit d'air 3 ne pourrait ainsi pas s'ouvrir entièrement et limite donc le flux d'air du conduit d'air 3 même quand l'utilisateur règle un flux d'air maximal. De plus, le système de commande de flux auquel est relié l'arbre de commande 41 commun au volets mobiles 40 et 45, qui est typiquement un moteur électrique, peut être détérioré à la longue par cette course réduite.

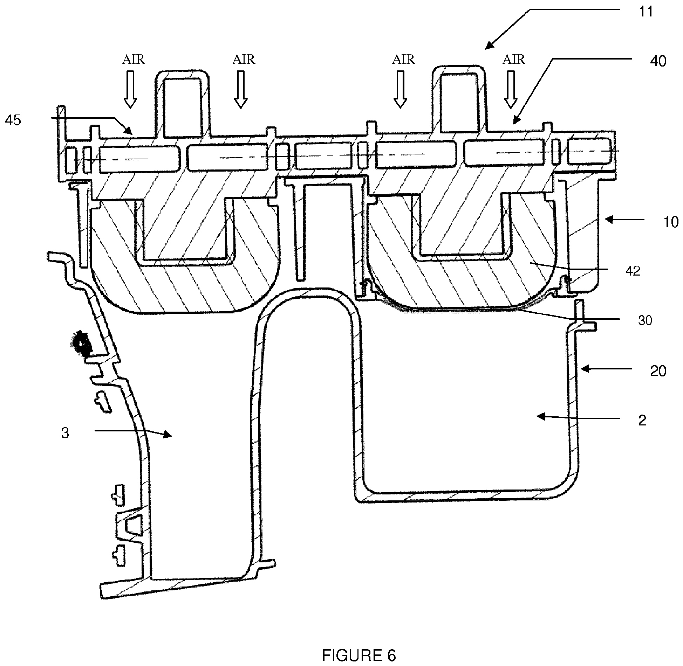

Afin de résoudre ces problèmes, l'obturateur 30 selon un premier mode de réalisation est muni d'une paroi comprenant une portion souple 31, comme visible à la Figure 6, de telle sorte à pouvoir être déformée par le volet mobile 40, en particulier par le bras d'obturation 42. Grâce à cette portion souple 31, le volet mobile 40 peut atteindre la seconde position parallèle à l'axe du conduit d'air 2 même quand le conduit d'air 2 est obturé par l'obturateur 30. Le volet mobile 45 du conduit d'air parallèle 3 et qui partage le même arbre de commande 41 n'est donc pas gêné et peut atteindre également la seconde position parallèle à l'axe du conduit d'air 3 et autoriser un flux d'air maximal.

La portion souple 31 de l'obturateur est faite d'un matériau souple durable, tel que les élastomères naturels ou synthétiques comprenant par exemple le caoutchouc, le polyisoprène synthétique, le polybutadiène ou le copolymère de styrène butadiène. La portion souple 31 peut être également faite de papier, de carton ou de tissu, enduit ou non. L'épaisseur de la portion souple 31 peut être choisie en fonction de la force appliquée par le volet mobile 40 ainsi que du matériau. Par exemple, le déplacement de la portion souple 31 lors du contact avec le volet mobile 40 est de 0,1 à 1,5 cm.

Enfin, la portion souple 31 peut reprendre sa forme quand le volet mobile passe de la second position à la première position.

De façon préférentielle, l'obturateur 30 est substantiellement étanche. Ceci signifie que le flux d'air dans le conduit d'air 2 obturé par l'obturateur 30 est réduit d'au moins 95 %, préférentiellement au moins 99 %.

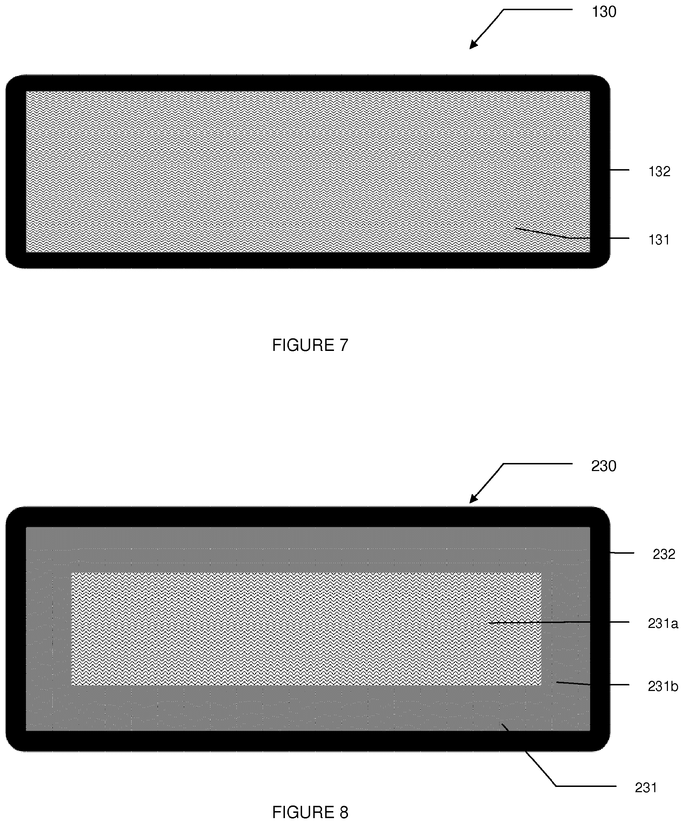

Un obturateur 130 selon un deuxième mode de réalisation est visible à la Figure 7 et comprend une portion souple 131 similaire à la portion souple 31 selon le premier mode de réalisation, ainsi qu'un cadre 132 définissant un périmètre de la portion souple 131. Le cadre 132 peut être fait de la même matière que la portion souple 131 mais d'une épaisseur supérieure. Alternativement, le cadre 132 peut être fait d'une matière rigide, tel qu'un plastique comme le polypropylène, le polyéthylène, le copolymère d'acrylonitrile-butadiène-styrène ou tout autre polymère équivalent. Le cadre 132 peut être également fait d'un métal comme l'acier ou l'aluminium ou bien d'un matériau composite. Le cadre 132 confère une résistance supérieure à la portion souple 131 et permet la fixation de l'obturateur 130 dans le système de ventilation 1 par collage, soudure, emboitement (clipsage) ou encore écrasement entre le carter 10 et le répartiteur de flux 20. Le cadre 132 peut aussi comprendre des moyens d'attache (non visibles) tels que des crochets, des plots ou des jambes d'emboitement.

Un obturateur 230 selon un troisième mode de réalisation est visible à la Figure 8 et comprend une paroi 231 comprenant une portion souple 231a similaire aux parois souples 31 et 131 des autres modes de réalisation ainsi qu'une portion rigide 231 b. La portion rigide, au contraire de la portion souple, est faite d'un matériau qui n'est pas susceptible de se déformer lorsqu'il est en contact avec le volet mobile La portion rigide 231 b peut être faite d'une matière rigide, tel qu'un plastique comme le polypropylène, le polyéthylène, le copolymère d'acrylonitrile-butadiène-styrène ou tout autre plastique équivalent. Elle peut également être faite en métal ou en composite. L'obturateur 230 comprend un cadre 232 définissant un périmètre de la portion souple 231. Le cadre 232 est similaire au cadre 132. L'obturateur 230 présente une résistance au déchirement renforcée et peut être adopté dans le cas de système de ventilation ayant des conduits d'air de diamètre important.

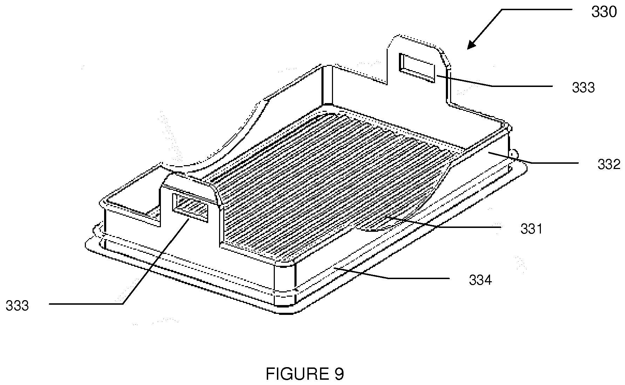

Un obturateur 330 selon un quatrième mode de réalisation est visible à la Figure 9 et comprend une portion souple 331 similaire aux parois souples 31 et 131 des autres modes de réalisation. Il comprend un cadre 332 définissant un périmètre de la portion souple 331. Le cadre 332 est similaire aux cadres 132 et 232 mais comprend en outre des moyens d'attache sous la forme de jambes d'emboitement 333, destinées à être emboitées/clipsée dans le carter 10 du système de ventilation 1. Le cadre 232 comprend en outre un joint d'étanchéité périphérique 334 afin d'améliorer l'étanchéité de l'obturateur 230, permettant par exemple de limiter le flux d'air d'au moins 95%, préférentiellement au moins 99%.

Un obturateur comprenant une paroi ayant au moins une portion souple selon la présente invention permet d'obturer un conduit d'air même quand les contraintes d'encombrement et de fabrication obligent à le placer à une distance limitée d'un volet mobile du système de ventilation, impliquant une interférence avec ce volet mobile. Par son aptitude à se déformer et à revenir à sa place, une portion souple d'une paroi d'un obturateur ne limite pas la rotation des volets mobiles, ce qui permet de prévenir des défaillances du système de contrôle de flux ainsi qu'autoriser une ouverture complète des volets mobiles situés dans les conduits d'air non obstrués et embarqués sur un même arbre de commande

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence aux types de volet mobile, aux différentes configurations possibles de système de ventilation ainsi qu'aux attaches de l'obturateur. En particulier, l'invention n'est pas limitée aux systèmes de ventilation comprenant un carter emboité sur un répartiteur de flux mais s'applique à tout type de système de ventilation.

## Revendications

1. Système de ventilation (1) comprenant :
- au moins un volet mobile (40),
- au moins un conduit d'air (2),
- au moins un obturateur (30, 130, 230, 330), comprenant une paroi agencée pour obturer le conduit d'air (2),
**caractérisé en ce que** ladite paroi comprend au moins une portion souple (31, 131, 231 a, 331) agencée pour être déformée lors d'un contact entre la paroi et le volet mobile pour permettre un déplacement complet du dit volet mobile (40).

2. Système de ventilation (1) selon la revendication précédente, où le volet mobile (40) est agencé pour adopter une première position dans laquelle il interdit le flux d'air et une deuxième position dans laquelle il autorise le flux d'air en l'absence de l'obturateur (30, 130, 230, 330), **caractérisé en ce que** la dite portion souple de la paroi de l'obturateur (31, 131, 231 a, 331) est déformée quand le volet mobile (40) passe de la première position à la deuxième position.

3. Système de ventilation selon l'une quelconque des revendications précédentes, où l'obturateur (30, 130, 230, 330) est placé à une distance du volet mobile (40) égale ou inférieur à la moitié de la longueur du dit volet mobile (40).

4. Système de ventilation selon l'une quelconque de revendications précédentes, comprenant en outre :
- un arbre de commande (41) sur lequel est embarqué le volet mobile (40),
- un deuxième conduit d'air (3),
- un deuxième volet mobile (45) agencé pour réguler un flux d'air dans le deuxième conduit d'air (3),
le deuxième volet mobile (45) étant embarqué sur ledit arbre de commande (41), pour être actionné en même temps que ledit volet mobile (40)

5. Système selon l'une quelconque des revendications précédentes, **caractérisé en ce que** la portion souple (31, 131, 231 a, 331) de ladite paroi de l'obturateur est déformée de façon réversible par le volet mobile (40).

6. Système selon l'une quelconque des revendications précédentes, **caractérisé en ce que** le dit obturateur (30, 130, 230, 330) comprend un cadre (132, 232, 332) définissant une périphérie de la portion souple (31, 131, 231a, 331).

7. Système selon la revendication précédente, **caractérisé en ce que** le dit cadre (332) de l'obturateur (330) comprend en outre des moyens d'attache (333), aptes à l'attacher au conduit d'air (2).

8. Système selon la revendication précédente, **caractérisé en ce que** les moyens d'attache (333) sont des moyens d'emboitement et/ou de clipsage,

9. Système selon l'une quelconque des revendications 6 à 8, **caractérisé en ce que** le dit cadre (332) de l'obturateur (330) comprend en outre un joint d'étanchéité périphérique (334) destiné à assurer une étanchéité avec le conduit d'air (2).

10. Système selon l'une quelconque des revendications précédentes, **caractérisé en ce que** ladite paroi comprend en outre une portion rigide (231 b).
